# EUROPÄISCHE PATENTSCHRIFT

(11) **EP 2 255 617 B1**
(45) Veröffentlichungstag und Bekanntmachung des Hinweises auf die Patenterteilung: **03.10.2012**
(21) Anmeldenummer: 10009608.0
(22) Anmeldetag: 15.09.2010
(51) Int. Cl.: A01K 15/02

(54) **Vorrichtung für die Hundeausbildung mit einem Bisskörper**
Dog training device with chewable body
Dispositif pour l'éducation de chiens avec un corps pour mâcher

(30) Priorität: 06.07.2010 DE 202010009962 U
(43) Veröffentlichungstag der Anmeldung: 01.12.2010
(73) Patentinhaber: Schwendinger, Markus, 87752 Schwaighausen (DE)
(72) Erfinder: Schwendinger, Markus, 87752 Schwaighausen (DE)
(74) Vertreter: Hofmann, Ralf U.

(56) Entgegenhaltungen:
- DE-U1- 20 109 693
- DE-U1-202005 007 412
- DE-U1-202005 010 788
- US-A1- 2009 026 348
- US-A1- 2010 147 228
- rosselex1: "MCRS MAGNETIC CANINE REWARD SYSTEM", http://www.mcrs-magnetball.be/a-16205788/m crs-products/mcrs-magnetball-6cm-with-rope , 27. Juni 2010 (2010-06-27), XP002630186, Gefunden im Internet: URL:http://www.youtube.com/watch?v=3yPxMgi P4lk [gefunden am 2011-03-24]

## Beschreibung

Die vorliegende Erfindung betrifft eine Vorrichtung für die Hundeausbildung mit einem Bisskörper zum Hineinbeißen seitens eines Hundes und einem an einer Kleidung eines Hundeausbilders befestigbaren Trägerkörper, an dem der Bisskörper lösbar befestigt oder befestigbar ist, wobei der Trägerkörper zumindest zwei Trägerkörperbauteile aufweist, welche mittels zumindest eines Magneten des Trägerkörpers lösbar aneinander befestigt oder befestigbar sind.

Es sind Vorrichtungen bekannt, welche bei der Hundeausbildung bzw. beim Hundetraining dazu eingesetzt, den Hund zu bestätigen. Die Bestätigung eines Hundes ist eine Art Belohnung des Hundes, wenn er eine Übung erfolgreich gemeistert hat. Beim Stand der Technik werden hierfür häufig Bisskörper, also Körper die dazu gedacht sind, dass der Hund in sie hinein beißt, in Form von Bällen verwendet, die an einem vom Tennisspielen bekannten Klipp an der Kleidung des Hundeausbilders lösbar befestigt werden können. Wichtig ist dabei, dass der Bisskörper so an der Kleidung des Hundeausbilders befestigt werden kann, dass dieser sich normal und frei bewegen kann, da Hunde oft bereits auf kleinste Anomalitäten oder Besonderheiten in der Bewegung ihres Hundeausbilders reagieren. Das Problem bei solchen Vorrichtungen für die Hundeausbildung liegt darin, dass der Bisskörper dem Hund mehr oder weniger starr erscheint. Für den Hund handelt es sich somit um tote Beute. Dies ist für ihn kein Triebobjekt.

Aus der US 2010/147228 A1 ist gattungsfremder Stand der Technik bekannt. Hier wird der Bisskörper mittels eines Klemmkeils am Hundeführer befestigt. Der Klemmkeil kann zur Befestigung in eine entsprechende Ausnehmung des Bisskörpers eingeführt werden. In dem ebenfalls vorveröffentlichten Film "MCRS Magnetic Canine Reward System" wird ein Ball mit einer Schnur an verschiedenen Stellen an einer Weste befestigt. Die DE 20 2005 007 412 U1 offenbart für das kynologische Training ein Etui zur Aufbewahrung eines Balls, dessen unteres Ende mittels eines Magneten verschlossen wird. In der DE 20 2005 010 788 U1 ist ein Kleidungsstück in Form eines T-Shirts oder Hemds gezeigt, bei dem Brusttaschen unten offen ausgeführt sind. In diese Brusttaschen werden Röhren eingeschoben, deren unteres Ende mittels eines Gurtbandes verschließbar ist, sodass ein Ball in diesen Röhren gehalten werden kann. Ein am Gurtband befestigter Magnet dient dazu, das Gurtband in der Schließstellung zu halten und auch zur Befestigung der Röhre an der nach unten geöffneten Brusttasche des Kleidungsstücks.

Aufgabe der Erfindung ist es, gattungsgemäße Vorrichtungen dahingehend weiter zu bilden, dass sie vom Hund als Triebobjekt bzw. als lebendige Beute erkannt werden und möglichst rasch und flexibel einsetzbar sind.

Hierzu ist erfindungsgemäß vorgesehen, dass am Bisskörper zumindest ein flexibles Griffelement, vorzugsweise ein Seil oder Band, angebracht ist und der Bisskörper eine Außenhülle aufweist und zumindest ein Magnet oder zumindest ein magnetisierbares Material unter der Außenhülle im Inneren des Bisskörpers angeordnet ist und der Bisskörper einen, von der Außenhülle umgebenen Hohlraum aufweist und der Magnet oder das magnetisierbare Material frei beweglich im Hohlraum gelagert ist.

Insbesondere bei der professionellen Ausbildung eines Hundes wird die Bestätigung bei verschiedenen Übungsteilen aus jeweils anderen Positionen heraus gemacht. Mit der Erfindung wird erreicht, dass der Trägerkörper ohne viel Aufwand sehr rasch an verschiedensten Stellen der Kleidung des Hundeausbilders angebracht werden kann. Es ist möglich, ein Stück der Kleidung des Hundeausbilders zwischen den Trägerkörperbauteilen einzuklemmen, womit die beiden Trägerkörperbauteile und damit der Trägerkörper an sich sehr rasch an unterschiedlichsten Stellen der Kleidung des Hundebesitzers befestigt werden kann. Durch die Befestigung der beiden Trägerkörperbauteile aneinander mittels Magneten ist eine Art der Befestigung geschaffen, die sehr schnell geöffnet und auch wieder geschlossen werden kann. Ein weiterer Vorteil dieser magnetischen Befestigung der Trägerkörperbauteile aneinander besteht darin, dass, wenn der Hund versehentlich das Äußere der Trägerkörperbauteile zwischen die Zähne bekommt, es trotzdem nicht zur Zerstörung des Kleidungsstückes des Hundeausbilders kommt, da in diesem Fall die magnetische Verbindung der Trägerkörperbauteile untereinander gelöst wird.

Durch das flexible Griffelement am Bisskörper ist es möglich, den Bisskörper für den Hund sichtbar wie ein lebendiges Objekt zu bewegen. Hierdurch wird der Bisskörper zu einem Triebobjekt für den Hund, worauf er unmittelbar reagiert. Weiters sind durch das flexible Griffelement am Bisskörper Zerrspiele möglich. Weiters ist eine Bestätigung durch den Hund selber möglich. Allgemein wird der Spieltrieb gefördert. Der Bisskörper wird vom Hund nicht mehr als tote Beute aufgefasst. Weiters ist die Gefahr des VerschlucKens des Bisskörpers durch den Hund ausgeschlossen, ebenso wie die Verletzungsgefahr für den Hundeausbilder beim Entnehmen des Bisskörpers aus dem Hundemaul. Das flexible Griffelement ist günstigerweise außen am Bisskörper befestigt. Es kann sich beim Bisskörper um einen Ball handeln.

Um zu vermeiden, dass der Hund direkt auf den meist aus leicht splitterndem Material bestehenden Magneten beißen kann, ist vorgesehen, dass der Bisskörper eine Außenhülle aufweist und zumindest ein Magnet oder zumindest ein magnetisierbares Material unter der Außenhülle im Inneren des Bisskörpers angeordnet ist. Durch die freie Beweglichkeit des Magneten oder des magnetisierbaren Materials im Hohlraum des Bisskörpers kann sich der Magnet bzw. das magnetisierbare Material innerhalb des Bisskörpers jeweils frei ausrichten, ein versehentliches Abstoßen mit einem Magneten im Trägerkörper wegen Fehlpolung ist dadurch verhindert. Dies ermöglicht es, den Bisskörper in beliebigen Stellungen am Trägerkörper befestigen zu können.

Der Bisskörper kann zusätzlich zu anderen Bestandteilen natürlich auch zumindest einen oder mehrere Bälle aufweisen. Günstigerweise ist der Bisskörper bzw. der Ball aus Polyurethan oder einem ähnlich stabilen bzw. zähen aber auch bereichsweise elastischen Werkstoff, insbesondere Kunststoff, gefertigt. Zu bedenken ist dabei, dass Hunde mit ihrem Gebiss sehr hohe Drücke aufbringen können, so dass der Bisskörper entsprechend stabil ausgebildet sein muss. Das flexible Griffelement kann als Band, Seil oder dergleichen ausgebildet sein. Es sollte außerhalb des Bisskörpers günstigerweise zwischen 10 und 40 cm lang sein.

Weiters ist es günstig, wenn der Bisskörper nahtfrei ausgebildet ist. Nähte im Bisskörper erhöhen die Gefahr des Aufplatzens des Bisskörpers, wodurch es, wenn sich der Zahn des Hundes im durch das Aufplatzen entstehenden Spalt verkeilt, zum Zahnverlust beim Hund kommen kann. Dies ist durch nahtfreie Bisskörper wirksam verhindert, da es dort keine Nähte gibt. Zur Befestigung des Griffelementes kann der Bisskörper zumindest ein oder zwei, vorzugsweise einander gegenüberliegende Öffnungen aufweisen, durch die das flexible Griffelement hindurchgeführt sein kann. Günstigerweise verschließt dabei das flexible Griffelement die jeweilige Öffnung vollständig, um wiederum die genannte Verletzungsgefahr für den Hund durch Eindringen des Zahnes in die Öffnung zu vermeiden. Der Bisskörper weist günstigerweise einen Durchmesser zwischen 4 und 10 cm, vorzugsweise zwischen 5 und 7 cm, auf.

Eine einfache Art der lösbaren Befestigung des Bisskörpers am Trägerkörper wird erzielt, indem der Bisskörper mittels mindestens eines Magneten am Trägerkörper lösbar befestigt oder befestigbar ist. Es ist genauso gut möglich, dass der Trägerkörper zumindest einen Magneten aufweist, wie dass der Bisskörper zumindest einen Magneten aufweist. Generell reicht ein Magnet. Das entsprechende Gegenstück am Bisskörper oder Trägerkörper kann dann aus einem magnetisierbaren Material bestehen. Es ist aber genauso gut möglich, dass sowohl am Trägerkörper als auch am Bisskörper jeweils zumindest ein Magnet angeordnet ist, wodurch besonders große Haltekräfte erreicht werden können. Der Magnet oder das magnetisierbare Material kann in den von der Außenhülle umgebenen Hohlraum des Bisskörpers besonders gut dann eingebracht werden, wenn die Außenhülle zumindest eine Öffnung z. B. zum Hindurchführen des flexiblen Griffelementes aufweist. Diese Öffnung sollte nach Einführen des Magneten allerdings bissfest verschlossen werden, damit es wiederum zu keinen Verletzungen an den Zähnen des Hundes kommen kann.

Um zu vermeiden, dass die Zähne des Hundes verletzt werden, wenn dieser versehentlich auf den Trägerkörper beißt, ist günstigerweise vorgesehen, dass der oder die Magneten des Trägerkörpers, vorzugsweise jeweils, von einer Schutzhülle, vorzugsweise aus einem Elastomer, ummantelt sind. Durch diese Ummantelung mittels Schutzhülle wird vermieden, dass die Zähne direkt auf den Magneten gelangen und dieser dadurch splittern kann.

Um andererseits aber eine entsprechend feste Befestigung sicher zu stellen, sollten entsprechend starke Magneten zum Einsatz kommen. Z. B. ist es hierfür möglich, Magneten mit einer Magnetisierung N45 zu verwenden. So starke Magnetisierungen haben aber auch den Nachteil, dass es oft schwierig ist, die miteinander verbundenen Trägerbauteile wieder voneinander zu lösen. Um dieses Problem zu beseitigen, sehen günstige Ausgestaltungsformen der Erfindung vor, dass an zumindest einem der Trägerkörperbauteile, vorzugsweise an dessen Schutzhülle, ein, vorzugsweise laschenartiger, Lösegriff angeordnet ist. In der Regel ist es günstig, Permanentmagneten als Magneten zu verwenden. Es ist aber auch denkbar, Elektromagneten an den genannten Stellen der erfindungsgemäßen Vorrichtung einzusetzen.

Mit den beschriebenen Erfindungen ist es möglich, eine moderne kynologisch fachgerechte Ausbildung, insbesondere durch Selbstaktivierung seitens des Hundes durchzuführen.

Anhand der Figurenbeschreibung werden verschiedene Merkmale und Besonderheiten einer bevorzugten Ausgestaltungsform der Erfindung geschildert. Es zeigt:
- Fig. 1: ein erfindungsgemäßes Ausführungsbeispiel einer Vorrichtung für die Hundeaus- bildung in einer Außenansicht und
- Fig. 2: dieselbe Vorrichtung in einer geschnittenen Darstellung.

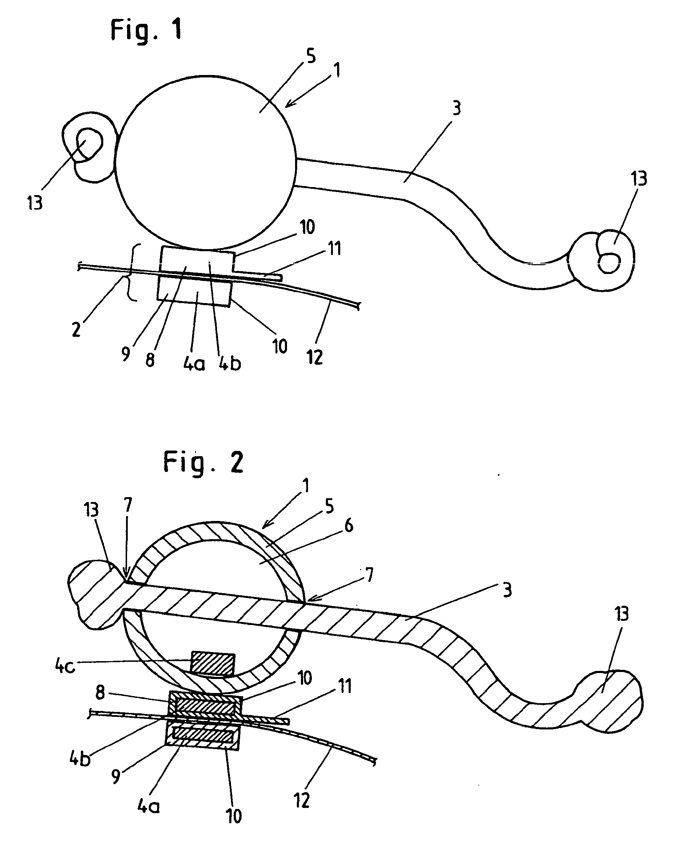

Die Fig. 1 zeigt eine Stellung, in der der Bisskörper 1 mittels Magneten 4a, 4b und 4c am Trägerkörper 2 befestigt ist. Am Bisskörper 1 ist das flexible Griffelement 3 in Form eines Seilstückes angebracht. An den Enden des Seilstückes sind im gezeigten Ausführungsbeispiel Knoten 13 vorgesehen. Der Bisskörper 1 ist im gezeigten Ausführungsbeispiel in Form eines Balles ausgeführt. Er weist eine Außenhülle 5 auf, welche den, in Fig. 2 gut sichtbaren Hohlraum 6 umschließt. Im Hohlraum 6 befindet sich ein, abgesehen von den magnetischen Kräften, frei beweglicher Magnet 4c. Dieser kann sich durch seine freie Beweglichkeit im Hohlraum 6 in einem äußeren Magnetfeld frei ausrichten, so dass der Bisskörper 1 in allen Stellungen am Trägerkörper 2 befestigbar ist und Abstoßung auf Grund von Fehlpolung vermieden ist. Im gezeigten Ausführungsbeispiel weist die Außenhülle 5 zwei Öffnungen 7 auf. Durch diese ist das flexible Griffelement 3 hindurchgeführt. Das flexible Griffelement 3 verschließt diese Öffnung 7 jeweils vollständig, so dass, wie eingangs geschildert, keine Gefahr besteht, dass der Hund seine Zähne an den Öffnungen 7 verletzt.

Der Ball 1 ist mittels magnetischer Haltekräfte am Trägerkörper 2 und damit an der Kleidung 12 des Hundeausbilders befestigt. Der Trägerkörper 2 weist zwei Trägerkörperbauteile 8 und 9 auf. Diese weisen im gezeigten Ausführungsbeispiel jeweils wiederum einen Magneten 4a und 4b auf, so dass die Trägerkörperbauteile 8 und 9 ebenfalls magnetisch aneinander befestigt sind. Hierdurch ist es möglich, wie in Fig. 1 und 2 gezeigt, die Kleidung 12 zwischen den Magneten 4a und 4b der Trägerbauteile 8 und 9 einzuklemmen, wodurch der Trägerkörper 2 und damit die gesamte Vorrichtung einfach und schnell an unterschiedlichsten Stellen der Kleidung 12 des Hundeausbilders angebracht werden kann. Damit die beiden Magneten 4a und 4b der Trägerkörperbauteile 8 und 9 wieder voneinander gelöst werden können, ist an zumindest einem der beiden Trägerbauteile 9 ein Lösegriff 11, der z. B. als Lasche ausgeführt sein kann, angeordnet. Um eine Verletzung der Zähne des Hundes zu vermeiden, wenn dieser versehentlich auf einen der Trägerkörperbauteile 8 oder 9 beißt, sind die Magneten 4a und 4b von Schutzhüllen 10 umgeben. Diese Schutzhüllen 10 bestehen günstigerweise aus einem Elastomer. Z. B. ist es möglich, die Magnete 4a und 4b mittels Schrumpfschlauch zu umhüllen. Im gezeigten Ausführungsbeispiel weist die Vorrichtung insgesamt drei Magnete 4a, 4b, 4c auf. Natürlich ist es auch möglich, mit nur einem einzigen entsprechend starken Magneten 4a oder 4b auszukommen und die beiden anderen Magneten durch magnetisierbares Material zu ersetzen. Bei magnetisierbarem Material handelt es sich z. B. um Metallkörper der dergleichen. Es ist auch denkbar, zwei Magneten und einen Körper aus magnetisierbarem Material zu verwenden. Bevorzugt weist der Trägerkörper zumindest einen Magneten auf.

### Legende

### zu den Hinweisziffern:

- 1: Bisskörper
- 2: Trägerkörper
- 3: flexibles Griffelement
- 4a,4b,4c: Magnet
- 5: Außenhülle
- 6: Hohlraum
- 7: Öffnungen
- 8: Trägerkörperbauteil
- 9: Trägerkörperbauteil
- 10: Schutzhülle
- 11: Lösegriff
- 12: Stück der Kleidung
- 13: Knoten

## Patentansprüche

1. Vorrichtung für die Hunddeausbildung mit einem Bisskörper (1) zum Hineinbeißen seitens eines Hundes und einem an einer Kleidung eines Hundeausbilders befestigbaren Trägerkörper (2), an dem der Bisskörper (1) lösbar befestigt oder befestigbar ist, wobei der Trägerkörper (2) zumindest zwei Trägerkörperbauteile (8, 9) aufweist, welche mittels zumindest eines Magneten (4a, 4b) des Trägerkörpers (2) lösbar aneinander befestigt oder befestigbar sind, **dadurch gekennzeichnet, dass** am Bisskörper (1) zumindest ein flexibles Griffelement (3), vorzugsweise ein Seil oder Band, angebracht ist und der Bisskörper (1) eine Außenhülle (5) aufweist und zumindest ein Magnet (4c) oder zumindest ein magnetisierbares Material unter der Außenhülle (5) im Inneren des Bisskörpers (1) angeordnet ist und der Bisskörper (1) einen, von der Außenhülle (5) umgebenen Hohlraum (6) aufweist und der Magnet (4c) oder das magnetisierbare Material frei beweglich im Hohlraum (6) gelagert ist

2. Vorrichtung nach Anspruch 1, **dadurch gekennzeichnet, dass** der Bisskörper (1) zumindest einen Ball aufweist oder aus einem Ball besteht.

3. Vorrichtung nach Anspruch 1 oder 2, **dadurch gekennzeichnet, dass** der Bisskörper (1) mittels mindestens einem Magneten (4a, 4b, 4c) am Trägerkörper (2) lösbar befestigt oder befestigbar ist.

4. Vorrichtung nach einem der Ansprüche 1 bis 3, **dadurch gekennzeichnet, dass** der Bisskörper (1) nahtfrei ausgebildet ist und/oder dass der Bisskörper (1) zumindest zwei, vorzugsweise einander gegenüberliegende, Öffnungen (7) aufweist, durch die das flexible Griffelement (3) hindurchgeführt ist und/oder dass das flexible Griffelement (3) außerhalb des Bisskörpers (1) von 10cm bis 40cm lang ist.

5. Vorrichtung nach einem der Ansprüche 1 bis 4, **dadurch gekennzeichnet, dass** der oder die Magneten (4a, 4b) des Trägerkörpers (2), vorzugsweise jeweils, von einer Schutzhülle (10), vorzugsweise aus einem Elastomer, ummantelt sind.

6. Vorrichtung nach einem der Ansprüche 1 bis 5, **dadurch gekennzeichnet, dass** an zumindest einem der Trägerkörperbauteile (8, 9), vorzugsweise an dessen Schutzhülle (10), ein, vorzugsweise laschenartiger, Lösegriff (11) angeordnet ist..

## Claims

1. A dog training device with a chewable body (1) for a dog to bite into and a bearer body (2), securable to clothing of a dog trainer, to which the chewable body (1) is secured or securable in a detachable manner, wherein the bearer body (2) has at least two bearer body parts (8, 9) secured or securable to one another in a detachable manner by means of at least one magnet (4a, 4b) of the bearer body (2), **characterised in that** at least one flexible grip part (3), preferably a cable or tape, is attached to the chewable body (1) and the chewable body (1) has an outer casing (5) and at least one magnet (4c) or at least one magnetisable material is arranged inside the chewable body (1) so as to be beneath the outer casing (5) and the chewable body (1) has a cavity (6) surrounded by the outer casing (5) and the magnet (4c) or the magnetisable material is arranged in a freely movable manner in the cavity (6).

2. A device according to claim 1, **characterised in that** the chewable body (1) has at least one ball or consists of a ball.

3. A device according to claim 1 or 2, **characterised in that** the chewable body (1) is secured or securable in a detachable manner to the bearer body (2) by means of at least one magnet (4a, 4b, 4c).

4. A device according to any one of claims 1 to 3, **characterised in that** the chewable body (1) is seam-free and/or **in that** the chewable body (1) has at least two openings (7), preferably opposite one another, through which the flexible grip part (3) is guided and/or **in that** the flexible grip part (3) is from 10 cm to 40 cm long outside of the chewable body (1).

5. A device according to any one of claims 1 to 4, **characterised in that** the magnet(s) (4a, 4b) of the bearer body (2) is/are, preferably in each case, encased by a protective cover (10), preferably of an elastomer.

6. A device according to any one of claims 1 to 5, **characterised in that** a, preferably flap-like, detachment grip (11) is arranged on at least one of the bearer body parts (8, 9), preferably on its protective cover (10).

## Revendications

1. Dispositif pour l'éducation des chiens avec un corps pour mâcher (1) à faire mordre par un chien et avec un corps de support (2) pouvant être fixé à un vêtement d'un éducateur de chien, et sur lequel le corps pour mâcher (1) est ou peut être fixé de façon détachable, dans lequel le corps de support (2) présente au moins deux parties de corps de support (8, 9), qui sont ou peuvent être fixées de façon détachable l'une à l'autre au moyen d'au moins un aimant (4a, 4b) du corps de support (2), **caractérisé en ce qu'**au moins un élément de saisie flexible (3), de préférence un câble ou une lanière, est attaché au corps pour mâcher (1) et le corps pour mâcher (1) présente une enveloppe extérieure (5) et au moins un aimant (4c) ou au moins un matériau magnétisable est disposé à l'intérieur du corps pour mâcher (1) sous l'enveloppe extérieure (5) et le corps pour mâcher (1) présente une cavité (6) entourée par l'enveloppe extérieure (5), et l'aimant (4c) ou le matériau magnétisable est librement mobile dans la cavité (6).

2. Dispositif selon la revendication 1, **caractérisé en ce que** le corps pour mâcher (1) présente au moins une balle ou est constitué d'une balle.

3. Dispositif selon la revendication 1 ou 2, **caractérisé en ce que** le corps pour mâcher (1) est ou peut être fixé de façon détachable au corps de support (2) au moyen d'au moins un aimant (4a, 4b, 4c).

4. Dispositif selon l'une quelconque des revendications 1 à 3, **caractérisé en ce que** le corps pour mâcher (1) est réalisé sans couture et/ou **en ce que** le corps pour mâcher (1) présente au moins deux ouvertures (7), de préférence opposées l'une à l'autre, à travers lesquelles l'élément de saisie flexible (3) est introduit et/ou **en ce que** l'élément de saisie flexible (3) a une longueur de 10 cm à 40 cm à l'extérieur du corps pour mâcher (1).

5. Dispositif selon l'une quelconque des revendications 1 à 4, **caractérisé en ce que** le ou les aimant(s) (4a, 4b) du corps de support (2) est/sont entouré(s), de préférence chacun, par une enveloppe de protection (10), de préférence en un élastomère.

6. Dispositif selon l'une quelconque des revendications 1 à 5, **caractérisé en ce qu'**une poignée de séparation (11), de préférence en forme de patte, est disposée sur au moins une des parties de corps de support (8, 9), de préférence sur son enveloppe de protection (10).
